# EUROPEAN PATENT APPLICATION

(11) **EP 1 407 927 A2**
(43) Date of publication of application: **14.04.2004**
(21) Application number: 03022661.7
(22) Date of filing: 07.10.2003
(51) Int. Cl.: B60N 2/66, B60N 2/44

(54) **Actuating mechanism for a spine support**

(30) Priority: 08.10.2002 DE 10246823
(71) Applicant: FICO CABLES, LDA, 4471 Maia (PT)
(72) Inventor: Martins, Carla Sobral, 4470-263 Vermoim-Maia (PT)
(74) Representative: Hess, Peter K., Dipl.-Phys.

(57) **Abstract**

The present invention relates to an actuating mechanism 1 for adjusting a spine support, in particular for the backrest of a vehicle seat. The actuating mechanism 1 is connected to the spine support via bowden cables and allows an adjustment of its concavity or its position. The actuating mechanism according to the invention comprises a shaft 10 for actuating at least one actuating element 20, 30, and a driving shaft 60 for driving a shaft 10 via a gear 40, 50, wherein the gear 40, 50 converts a first rotational angle of the driving shaft 60 into a second rotational angle of the shaft 10, and wherein the second rotational angle is greater than the first one.

## Description

### 1. Technical field

The present invention relates to a mechanism for actuating of a spine support, particular a spine support in a backrest of a vehicle seat.

### 2. Prior art

High quality vehicle seats can in many aspects be adapted to the anatomy of the driver. Besides the adaptation of the drivers seat with respect to the steering wheel and the adjustment of the backrest tilt, it is known for example to adjust the depth of the seat, tilt of the seat or height of the seat of the vehicle. Very high quality vehicle seats also allow to adjust the shape of the backrest to the respective driver. This can be done for example by inflatable support pillows, that are situated at different locations of the backrest. Further so-called spine supports are known, that are situated in the lower region of the backrest of a vehicle seat. These spine supports are adjustable in their concavity, so that the curvature of the backrest can be adapted to the back of the driver. In some vehicle seats, the height of the spine support can additionally be adjusted. To this end, the spine support is slideably arranged along the backrest. The adaptation of the backrest of a vehicle seat to a driver enables a relief of the spine and enables a more relaxed seating position. Problems of the back, that may occur during long drives, are thereby avoided.

Different actuating mechanisms for spine supports are known from the prior art. The adjustment of the concavity is usually made via pulling cables. Further the position, i.e. the height in the backrest, of the spine support can be adjusted by means of a further actuating mechanism.

The actuation of the pulling cables is performed by means of electrical or manual actuating mechanisms. Electrical actuating mechanisms can be mounted at any arbitrary position within the vehicle seat. Manual actuating mechanisms are normally integrated into the backrest, for an easy adjustment, in such a manner that a hand lever or rotary knob can easily be reached, when it extends at the side of the backrest. If concavity and height of the spine support are adjustable, two actuating mechanisms are needed.

Different embodiments of an actuating mechanism for a spine support are known from the EP 0 485 483, which regulates the curvature of the spine support via bowden cables. The actuating mechanism comprises a rotary knob with inner threads, into which a screw is moved under a rotation of the rotary knob. A pulling cable of a bowden cable is connected to the screw, so that the bowden cable is tightened by rotating the rotary knob. Thereby the concavity of the spine support is increased. This document further discloses an actuating mechanism wherein the pulling cable of a bowden cable is wound onto a drum. The drum is rotated by a rotary knob via a worm gear. Again, this causes the pulling cable of the bowden cable to be tightened or released, so that the spine support leads to a corresponding shape of the spine support.

Further actuating mechanisms for spine supports are known from the DE 198 50 121 and the EP 0 552 904 which adjust the spine support via bowden cables. The bowden cables are actuated by actuating elements, which are moved by a shaft with outer threads. The actuating elements are moved to or away from each other by means of two areas of the threads of the shaft with an opposite sense of rotation in case of a rotation of the shaft.

The above mentioned actuating mechanisms have the disadvantage, that for an adjustment of the spine support an operating element (for example a rotary knob) requires an operation of the operating element for a prolonged time. Therefore, a fast adjustment is not possible.

Based on the prior art, it is therefore the technical problem underlying the present invention to provide an actuating mechanism for a spine support that allows a fast and easy adjustment of the spine support.

### 3. Summary of the invention

The present invention solves this problem by an actuating mechanism that is based on a novel principle for adjusting a spine support, particularly for the backrest of a vehicle seat. The actuating mechanism is connected via bowden cables to the spine support and allows an adjustment of its concavity or its position.

An actuating mechanism according to the invention comprises a shaft for moving of at least one actuating element as well as a driving shaft for driving the shaft via a gear, wherein the gear converts a first rotational angle of the driving shaft into a second rotational angle of the shaft and wherein the second rotational angle is greater than the first one. The adjusting the spine support therefore requires less rotations of the driving shaft than the shaft. Therefore, the spine support can be adjusted fast and easily without multiple rotations of an motor or an operating element connected to the driving shaft.

In a first preferred embodiment the gear comprises a first bevel wheel connected to the driving shaft and a second bevel wheel connected to the shaft. Thereby, the actuating mechanism can be build very compact for an easier arrangment within the backrest of a seat. Furthermore, the first bevel wheel preferably comprises a larger diameter than the second bevel wheel. A rotation of the driving shaft is converted into a faster rotation of the shaft. Thereby, a faster adjustment of the spine support is achieved.

In a further preferred embodiment the first bevel wheel comprises a bevel wheel segment. If the gear transmission ratio between the bevel wheels is sufficiantly high, not an entire first bevel wheel is needed, but only a segment thereof. The unnecessary material and the unnecessary space can thereby be spared. In a particularly preferred embodiment, the first bevel wheel consists of a bevel wheel segment, which comprises a segment angle of substantially 120°. The spine support is adjusted by rotating an actuating element connected to the bevel wheel segment, for example a rotary knob, by a maximum rotation of 120° only. Therefore, the spine support can be adjusted by a single movement of the wrist.

In a further preferred embodiment the driving shaft is arranged substantially perpendicularly to the shaft. The actuating mechanism can then favorably be arranged at the frame of a vehicle seat, wherein the bowden cables connected to the actuating mechanism can be guided without heavy bending.

In a further preferred embodiment the shaft comprises outer threads, having a first part with a first sense of rotation and a second part with a second sense of rotation.

Preferably, the actuating mechanism further comprises a first actuating element engaging the first part of the outer threads of the shaft by inner threads and a second actuating element engaging the second part of the outer threads of the shaft by inner threads. Under a rotation of the shaft, the engaged actuating elements are sliding to or away from each other.

Preferably, the first range of the outer threads of the shaft is made as a left handed threads and the second range of the outer threads of the shaft is made as a right handed threads. In another preferred embodiment the first range of the outer threads of the shaft could be made as a right handed threads and the second range of the outer threads of the shaft can be made as a left handed threads.

In a further preferred embodiment the lead of the parts of the outer threads of the shaft are configured so that for an arbitrary adjustment of the spine support, the shaft does a rotation of not more than 360°. Thereby, the spine support can be adjusted, by not more than a single rotation of the shaft.

In a further preferred embodiment the driving shaft is connected to a rotary knob or a hand lever for a manually actuation of the spine support. For a manually adjustment of the spine support the user can actuate a rotary knob or a hand lever situated at the vehicle seat.

In a further preferred embodiment the driving shaft is connected to a motor for an motorized actuation of the spine support. Thus, the spine support can for example electrically be adjusted.

In a further preferred embodiment a pulling cable of at least one bowden cable is connected with a first actuating element for actuating a spine support. Preferably one sheeting of the at least one bowden cable is connected with the second actuating element. The concavity of the spine support or the position of the spine support in the backrest is adjusted via this at least one bowden cable.

In a further preferred embodiment at least two bowden cables are connected with the actuating elements. Thereby, the spine support can for example be shifted in parallel, if the first bowden cable is attached to the left side and the second bowden cable is attached on the right side of the spine support.

In a further preferred embodiment the actuating mechanism comprises fixing elements, that connect the actuating mechanism to the frame of the vehicle seat. Preferably these fixing elements comprise clips, for clipping the actuating mechanism to the frame of a vehicle seat. Thereby, the actuating mechanism can be mounted fast and without tools.

In a further preferred embodiment the actuating mechanism comprises contact faces at its outside, for mounting the actuating mechanism to the frame of a vehicle seat. The actuating mechanism contacts the frame of the vehicle seat after the mounting at special contact faces, and thereby has a defined and substantially clearance free position.

### 4. Short description of the drawing

In the following, the preferred embodiments of the present invention are described with reference to the drawing, which shows:
- Fig. 1: The actuating mechanism according to a preferred embodiment shown in an open housing;
- Fig. 2: a schematic representation of the force transmitting elements of the actuating mechanism according to a preferred embodiment;
- Fig. 3: the actuating mechanism according to a preferred embodiment with fixing elements.

### 5. Detailed description of the preferred embodiments

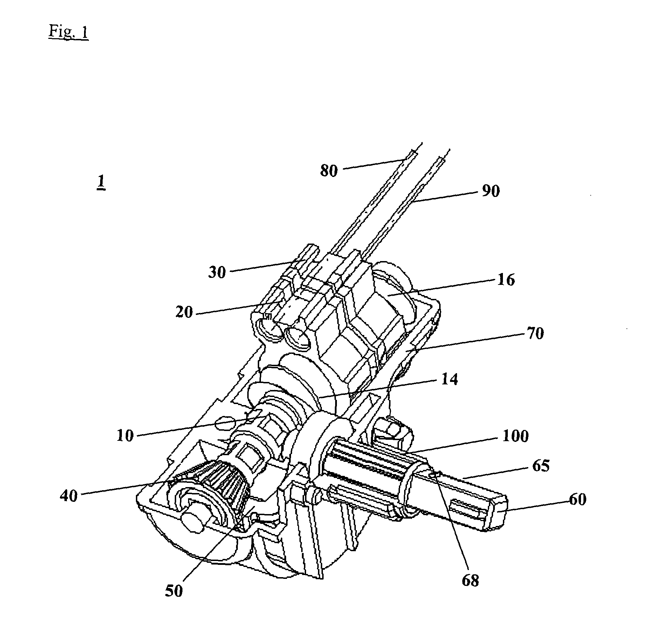

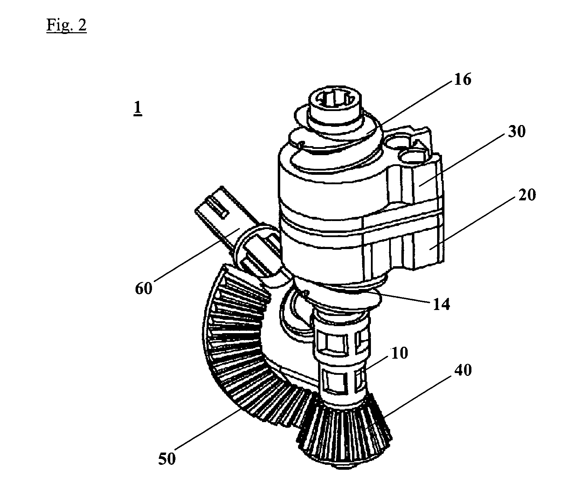

A preferred embodiment of the actuating mechanism according to the invention is explained in the following referring to the drawings shown in Figure 1 and Figure 2.

In a first preferred embodiment the actuating mechanism 1 comprises a first 20 and a second actuating element 30 to which a first pulling cable 80 and a second pulling cable 90 is connected. The pulling cables 80, 90 are parts of two bowden cables (not shown) which are connected with a spine support. Preferably, the pulling cables 80, 90 are uniformly actuated. To this end, the pulling cables 80, 90 are connected with a first actuating element 20 and the sheath of the bowden cable with the second actuating element 30. The pulling cables 80, 90 are tightened when the first actuating element 20 and the second actuating element 30 are moved away from each other. The actuating elements 20, 30 are moveably supported within the housing 70.

In a less preferred embodiment only one movable actuating element 20, 30 may be provided. The pulling cable or the sheath of the bowden cable is then connected with the movable actuating element, whereas the other part of the bowden cable is connected with a rigid receptacle.

The spine support connected to the actuating mechanism is adjusted by means of the tension of the pulling cables 80, 90. As mentioned above, the spine supports can usually be adjusted in their concavity and also in their height. For adjusting the concavity the pulling cables 80, 90 of a first actuating mechanism 1 are connected to the curvature mechanism of a spine support (not shown). A tightening of the cables 80, 90, for example, increases the concavity of the spine support, a releasing decreases the concavity. An opposing kind of operation is achieved by another embodiment of the curvature mechanism.

For adjusting the height of the spine support the pulling cables 80, 90 of a second actuating mechanism 1 are connected to a translating mechanism of a spine support (not shown). Due to the translating mechanism the height of the spine support can be adjusted within the backrest. The actuating of the second actuating mechanism 1 for example leads to a parallel up or down movement of the spine support within the backrest of a vehicle seat. For adjusting the concavity and the height of the spine support, the actuating mechanism 1 may be identically or differently provided, depending on the respective embodiment.

Preferably, the actuating elements 20, 30 of an actuating mechanism 1 each comprise inner threads that engage the outer threads 14, 16 of a shaft 10. The inner threads of the first actuating element 20 are preferably provided as a left handed threads, the inner threads of the second actuating element 30 are preferably provided as a right handed threads. Therefore the shaft 10 comprises two threaded parts 14, 16, wherein the first part 14 is provided as left handed threads, which engage the left handed threads of the first actuating element 20. The second part 16 of the threads of the shaft 10 is configured as a right handed threads, which engage the inner threads of the second actuating element 30. Under a rotation of the shaft 10, the actuating elements 20, 30 are shifted to or away from each other. In another embodiment of the present invention the senses of rotation of the threaded parts are configured the other way round. This does not effect the functional principle of the actuating mechanism 1.

The above mentioned senses of rotation are preferably described for an actuating element 20 which is installed into a left seat of a vehicle. For an actuating element 20 of a right seat the actuation element 20 would we configured as follows. The inner threads of the first actuating element 20 are preferably provided as a right handed threads, the inner threads of the second actuating element 30 are preferably provided as a left handed threads. Therefore the shaft 10 comprises two threaded parts 14, 16, wherein the first part 14 is provided as right handed threads, which engage the right handed threads of the first actuating element 20. The second part 16 of the threads of the shaft 10 is configured as left handed threads, which engage the left handed inner threads of the second actuating element 30.

The lead of the parts 14, 16 of the outer threads of the shaft 10 are preferably configured, so that, for an actuation of the spine support along its complete range of adjustment preferably few rotations of the shaft 10 are necessary. Therefore, the user does not have to rotate the operating element long winded for adjusting the spine support but can adjust the spine support with one movement of the wrist. Preferably, the lead of the parts 14, 16 of the outer threads of the shaft 10 are selected such that the shaft 10 for an arbitrary actuation of the spine support performs a maximum rotation of 360°.

Preferably, the shaft 10 comprises a bevel wheel 40, for driving the shaft 10. The bevel wheel 40 engages with a bevel wheel 50, which has preferably a greater diameter than the bevel wheel 40. The bevel wheel 50 is connected with a driving shaft 60 which is preferably located substantially perpendicular to the shaft 10. Due to a rotation of the driving shaft 60 around a first angle, the shaft 10 is rotated around a second angle. The gear is configured so that the second rotational angle is larger than the first one. That means, that the gear 40, 50 is configured as a gear with a speed increasing ratio. As a consequence, it is not necessary to excessively rotate the driving shaft 60 for an adjustment of the spine support.

Preferably the bevel wheel 50 is provided as a bevel wheel segment, in case the transmission ratio between bevel wheel 50 and 40 is selected sufficiently high. Then, the driving shaft 60 must only be rotated around a certain angle, for example to adjust the spine support to its maximum concavity. In a particularly preferred embodiment, the bevel wheel segment of the bevel wheel 50 comprises an angle of 120°. Thereby, the diameter of the bevel wheel 50 is selected to be great enough, so that the shaft 10 is rotated around the necessary angle of rotation, for example 360°, when the bevel wheel 50 is rotated around 120°. In this case the driving shaft 60 may for example be actuated by means of an hand lever.

The driving shaft 60 is as well as the shaft 10 supported inside the housing 70. Under a rotation of the driving shaft 60, the bevel wheel 50 connected thereto leading to a rotation of the bevel wheel 40 of the shaft 10 engaged thereto.

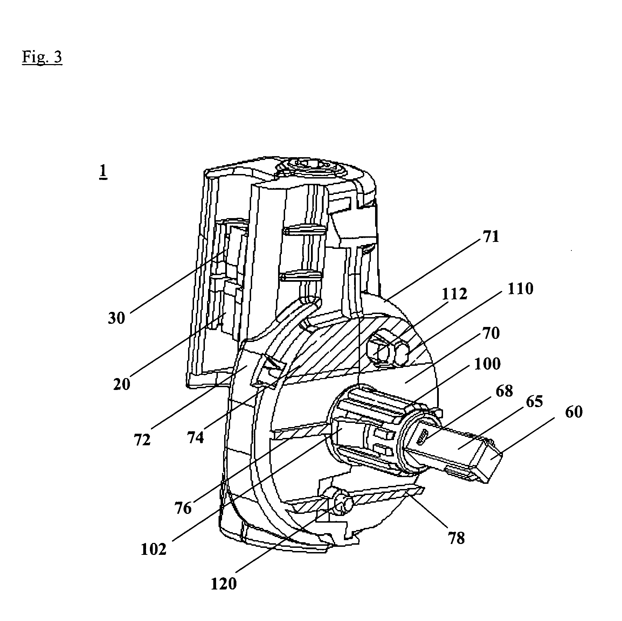

Preferably, the driving shaft 60 extends through a hub 100 out of the housing 70 of the actuating mechanism 1 as shown in Figure 3. At the free end of the driving shaft 60, which extends out of the housing 70, a shaft connection 65 is provided. The shaft connection 65 can be provided as an arbitrary positive or none-positive shaft connection. Preferably, the shaft connection 65 is made as a squared connection. An operating element (not shown), for example a rotary knob or a hand lever, is preferably attached to the shaft connection 65 of the driving shaft 60. A rotational motion is applied to the actuating mechanism 1 via the hand lever or the rotary knob. A user can adjust the spine support of the vehicle seat via these operating elements.

In a preferred embodiment, an actuation of the operating element with a torque of max. 4 Nm leads to a tensile force on one of the pulling cables 80, 90 of max. 800 N. Thereby, the spine support can be adjusted in its complete range of adjustment by the small rotation of the operating element of not more than 120°. The operator can comfortably adjust the spine support with a single rotation of the wrist or a small displacement of the hand lever. Multiple rotations of the operating element are not necessary. The adjustment of the spine support is fast and comfortable.

Preferably, a motor (not shown) can be connected to the driving shaft 60 instead of a manual operating element. Thereby, the spine support can be for example electrically be adjusted. Low speed electric motors or other motorized drives can be used due to the gear. Also other drives can be used, that rotate by a certain rotational angle only.

The mechanism described above is preferably encapsulated by a housing 70. With respect to Figure 3, the housing 70 consists of two housing halves 71, 72 which are preferably divided substantially on the height of the symmetry lines of the shaft 10 and the driving shaft 60. For bearing the shaft 10 as well as the driving shaft 60 bearing halves are formed into the housing 70. Further, gliding faces are formed into the housing 10 to stop a rotation of the actuating elements 20, 30 and to allow their axial shift.

The housing 70 as well as all gear elements described above are preferably manufactured from metals, plastic materials or composite materials. The elements of the actuating mechanism 1 preferably consist of a glass fiber reinforced plastic material.

In a preferred embodiment, the actuating mechanism 1 is mounted from the inside at the lateral frame of a backrest of a vehicle seat. The frame of a backrest usually consists of a formed sheet metal part. For assembly, the hub 100 is pushed through the frame, so that the driving shaft 60 protrudes laterally out of the backrest. Since the actuating mechanism 1 is connected to the spine support via bowden cables, the assembly position of the actuating mechanism 1 can freely by selected at the backrest. Due to the preferably perpendicular arrangement of the driving shaft 60 to the shaft 10, the bowden cables initially run parallel to the lateral frame of the backrest at their exit location of the actuating mechanism 1. Thereby, the bowden cables can be connected to the spine support with an advantageous 180° curve.

Preferably the assembly position of the actuating mechanism 1 is chosen according to ergonomic aspects. During driving, the operating element must easily be reached and actuated by the driver. To arrange the actuating mechanism 1 it is particularly preferred slightly below the mid of the side of the backrest of a vehicle seat. In case the concavity and also the height of the spine support should be adjusted, two actuating mechanisms 1 are preferably arranged at the side of the backrest of a vehicle seat.

The actuating mechanism 1 can be mounted at the frame of the backrest by means of all common mounting techniques, for example screwing, riveting or gluing. Preferably, the actuating mechanism 1 is mounted to the frame of the backrest by clipping. The housing 70 of the actuating mechanism 1 preferably comprises several connecting elements 100, 110, 120 as shown in Figure 3. In the shown embodiment, a connecting element 110, a locating pin 120, a hub 100 as well as contact faces 74, 76 and 78 are provided at the housing 70.

For mounting the actuating mechanism 1 within the backrest, the actuating mechanism 1 is clipped to the frame of the backrest. Therefore holes in the frame of the backrest are provided which correspond to the fixing elements 100, 110, 120. The fixing elements 100, 110, 120 protruding from the contact faces 74, 76, 78 are pushed through the corresponding holes in the sheet metal frame. For the clipping of the actuating mechanism 1 to the sheet metal frame, the fixing element 110 and the hub 100 are provided with clips 102, 112, engaging during assembly the sheet metal of the frame of the backrest. A locating pin 120, which also engages a respective hole in the sheet metal of the frame of the backrest, fixes the position of the actuating mechanism 1 at the backrest.

The actuating mechanism 1 is mounted fast and easily to the frame of the backrest by clipping from the inside. In the mounted state the contact faces 74, 76, 78 are evenly contacting the sheet metal of the frame. For a disassembly, the clips 102 and 112 are pushed in from the outside, and the actuating mechanism 1 can easily be released from the frame of the backrest of the vehicle seat.

After the assembly of the actuating mechanism 1 to the frame of the backrest an operating element (not shown) is attached to the shaft connection 65 of the driving shaft 60 from the outside. The operating element can be formed arbitrarily, for example as a rotary knob or hand lever. The shaft connection 65 is provided with an indentation 68 in order to provide a secure mounting of the operating element to the driving shaft 60. The indentation 68 engages a respective recess within the operating element. A disassembly can be done by pulling at the operating element with an increased force.

### List of reference signs

- 1: Actuating mechanism
- 10: Shaft
- 14: Left handed threads
- 16: Right handed threads
- 20: First actuating element
- 30: Second actuating element
- 40: Bevel wheel of the shaft
- 50: Bevel wheel of the driving shaft
- 60: Driving shaft
- 65: Shaft connection
- 68: Indentation
- 70: Housing
- 71: First half of the housing
- 72: Second half of the housing
- 74: First contact face
- 76: Second contact face
- 78: Third contact face
- 80: First pulling cable
- 90: Second pulling cable
- 100: Hub
- 102: Clip at the hub
- 110: Connecting element
- 112: Clip at the connecting element
- 120: Locating pin

## Claims

1. An actuating mechanism (1) for actuating a spine support, in particular a spine support of a backrest of a vehicle seat, comprising:
a. a shaft (10) for actuating at least one actuating element (20, 30);
b. a driving shaft (60) for driving the shaft (10) via a gear (40, 50);
c. wherein the gear (40, 50) converts a first rotational angle of the driving shaft (60) into a second rotational angle of the shaft (10); and wherein
d. the second rotational angle is greater than the first one.

2. Actuating mechanism (1) according to claim 1, wherein the gear (40, 50) comprises a first bevel wheel (50) connected to the driving shaft (60) and a second bevel wheel (40) connected to the shaft (10).

3. Actuating mechanism (1) according to claim 2, wherein the first bevel wheel (50) comprises a larger diameter than the second bevel wheel (40).

4. Actuating mechanism (1) according to one of the claims 2 or 3, wherein the first bevel wheel (50) is provided as a segment of a bevel wheel.

5. Actuating mechanism (1) according to claim 4, wherein the bevel wheel segment (50) has a segment angle of substantially 120°.

6. Actuating mechanism (1) according to one of the claims 1 to 5, wherein the driving shaft (60) is substantially perpendicularly arranged with respect to the shaft (10).

7. Actuating mechanism (1) according to one of the claims 1 to 6, wherein the shaft (10) comprises outer threads (14, 16), comprising a first part (14) with a first sense of rotation and a second part (16) with a second sense of rotation.

8. Actuating mechanism (1) according to one of the claims 1 to 7, further comprising:
a. a first actuating element (20) engaging the first part of the outer threads (14) of the shaft (10) by inner threads; and
b. a second actuating element (30) engaging the second part of the outer threads (16) of the shaft (10) by inner threads.

9. Actuating mechanism (1) according to claim 8, wherein the first part (14) of the outer threads of the shaft (10) are formed as a left handed threads and the second part (16) of the outer threads of the shaft (10) as right handed threads.

10. Actuating mechanism (1) according to claim 8, wherein the first part (14) of the outer threads of the shaft (10) is formed as right handed threads and the second part (16) of the outer threads of the shaft (10) as left handed threads.

11. Actuating mechanism (1) according to one of the claims 1 to 10, wherein the lead of the parts (14, 16) of the outer threads of the shaft (10) are configured so that, the shaft (10) performs a rotation of not more than 360° for an arbitrary adjustment of the spine support.

12. Actuating mechanism (1) according to one of the claims 1 to 11, wherein the driving shaft (60) is connected to a rotary knob or a hand lever for manual actuation of the spine support.

13. Actuation mechanism (1) according to one of the claims 1 to 11, wherein the driving shaft (60) is connected to a motor for motorized actuation of the spine support.

14. Actuating mechanism (1) according to one of the claims 1 to 13, wherein a pulling cable (80, 90) of at least one bowden cable is connected to a first actuating element (20).

15. Actuating mechanism (1) according to one of the claims 1 to 14, wherein the sheath of the at least one bowden cable is connected to the second actuating element (30).

16. Actuating mechanism (1) according to one of the claims 14 or 15, wherein at least two bowden cables are connected to the actuating elements (20, 30).

17. Actuating mechanism (1) according to one of the claims 1 to 16, further comprising fixing elements (100, 110, 120) that connect the operating mechanism (1) to the frame of a vehicle seat.

18. Actuating mechanism (1) according to claim 17, wherein the fixing elements (100, 110, 120) comprise clips (102, 112), for clipping the operating mechanism (1) to the frame of a vehicle seat.

19. Actuating mechanism (1) according to one of the claims 1 to 18, further comprising contact faces (74, 76, 78) at its outside, for mounting the operating mechanism (1) to the frame of a vehicle seat.
